# EUROPÄISCHE PATENTSCHRIFT

(11) **EP 1 155 743 B1**
(45) Veröffentlichungstag und Bekanntmachung des Hinweises auf die Patenterteilung: **20.09.2006**
(21) Anmeldenummer: 01110828.9
(22) Anmeldetag: 04.05.2001
(51) Int. Cl.: B01L 9/00, G01N 35/04, C12M 1/00

(54) **Klimaschrank mit Transporteinrichtung**
Air-conditioned cabinet with transport device
Armoire de climatisation avec dispositif de transport

(30) Priorität: 19.05.2000 DE 10024581
(43) Veröffentlichungstag der Anmeldung: 21.11.2001
(73) Patentinhaber: Thermo Electron LED GmbH, 63505 Langenselbold (DE)
(72) Erfinder: Dick, Thorsten, 36039 Fulda (DE); Gonska, Gernot, 61118 Bad Vilbel (DE); Reinhardt, Heiko, 63456 Hanau (DE)
(74) Vertreter: Lang, Friedrich

(56) Entgegenhaltungen:
- CH-A- 690 962
- DE-U- 20 004 202

## Beschreibung

Die Erfindung betrifft einen Klimaschrank mit mindestens einer Tür, mit einer Lagerstation mit mindestens einer Objekt-Lagervorrichtung, welche mehrere übereinander angeordnete Objekt-Lagerstellen aufweist, sowie mit einer Transporteinrichtung zum Zuführen von Objekten zu den Objekt-Lagerstellen, wobei die Transporteinrichtung eine Objekt-Aufnahme aufweist, wobei die Objekt-Aufnahme an einem Vertikalschlitten vertikal und horizontal verstellbar angeordnet ist und wobei Lagerstation und Transporteinrichtung auf Montageplatten angeordnet sind.

Derartige Klimaschränke sind aus WO98/05753 bekannt. In dieser Druckschrift werden Klimaschränke offenbart, in denen mittels eines Transportsystems Objekte, beispielsweise Mikrotiterplatten oder Objekt-Trägerplatten, im weiteren insgesamt als Objekte bezeichnet, in Magazine geführt oder von dort entnommen. Die Magazine sind dabei karussellartig, d.h. drehbar, ausgebildet, wobei einem oder mehreren derartiger Magazine jeweils ein Transportsystem zugeordnet ist. Das Transportsystem ermöglicht die vertikale und horizontale Bewegung von Objekten, wobei die horizontale Bewegbarkeit sowohl durch translatorische als auch durch Rotationsbewegung realisiert wird. Für den Bewegungsablauf sind zahlreiche Antriebseinrichtungen notwenig, wie beispielsweise Elektromotoren.

Aufgabe der vorliegenden Erfindung ist es, die Funktionalität der bekannten Klimaschränke zu verbessern und ihre Zuverlässigkeit zu erhöhen.

Die Aufgabe wird für einen eingangs charakterisierten Klimaschrank durch die Kennzeichnenden Merkmale von Anspruch 1 gelöst.

Nach Anspruch 1 ist die Objekt-Aufnahme durch ein bewegliches Verbindungselement, das über eine im oberen Bereich des Vertikalschlittens angeordnete Umlenkeinheit geführt ist, mit einem Gegengewicht verbunden. Dadurch wird ein Teil der vertikal zu bewegenden Masse kompensiert, so dass weniger Energie für die Vertikalbewegung benötigt wird. Dementsprechend können die Antriebseinrichtungen für die Vertikaleinrichtung, beispielsweise Elektromotoren, entsprechend kleiner ausgebildet werden.

Eine weitere Ausführungsform der Erfindung ist dadurch gekennzeichnet, dass die Objekt-Aufnahme Führungsschienen zum Führen des zu transportierenden Objekts aufweist und mindestens einen Tastschalter mit einem beweglichen Schaltelement, das in den Bereich des von der Objekt-Aufnahme aufzunehmenden Objekts hineinragt, wobei der Tastschalter in einer Aufnahmestellung des Objekts in der Objekt-Aufnahme durch Bewegen des Schaltelementes ein Signal auslöst. Wenn das Objekt in die Objekt-Aufnahme eingeführt wird, wird es durch Führungsschienen und damit definiert geführt. Bei seiner Bewegung in die vorgesehene Stellung in bzw. an der Objekt-Aufnahme schiebt das Objekt das bewegliche Schaltelement aus diesem Bereich heraus. Der Tastschalter löst dabei in bekannter Weise ein Signal aus. Das Schaltelement kann in bekannter Weise unterschiedlich ausgebildet sein und beispielsweise eine geradlinige Bewegung oder eine Bewegung auf einer gekrümmten Bahn ausführen. Derartige Tastschalter haben den Vorteil, dass sie unter Bedingungen eingesetzt werden könne, in denen übliche optische Erkennungssysteme versagen, beispielsweise bei hohen Temperaturen in Verbindung mit hoher Luftfeuchtigkeit. Die Führungsschienen sichern dabei, dass der Tastschalter wirksam ausgelöst wird und das Objekt sich in der vorgesehenen Weise bewegt und nicht von dem Tatschalter in eine unbeabsichtigte Richtung gedrängt wird. Der Tastschalter kann dabei sowohl in waagerechter Ausrichtung seitlich in der Objekt-Aufnahme eingesetzt sein als auch unterhalb des Raumes, der zur Aufnahme des Objektes in der Objekt-Aufnahme vorgesehen ist. Dadurch wird eine sichere Erkennung der korrekten Ablage des Objektes gewährleistet.

Eine weitere Ausführungsform der Erfindung ist dadurch gekennzeichnet, dass die Objekt-Aufnahme eine horizontal bewegliche Schaufel zur Aufnahme mindestens eines Objektes aufweist, dass die Schaufel von einem Motor angetrieben wird und dass der Motor an der Schaufel angeordnet ist. Durch eine derartige Anordnung ist eine relativ kleine Bauform möglich und der Antrieb kann sehr einfach ausgeführt werden. Die Bedienöffnung kann sehr klein ausgebildet werden, so dass das Klima in dem Klimaschrank nicht wesentlich beeinträchtigt wird. Außerdem wird die Funktionssicherheit der Objekt-Aufnahme erhöht.

Erfindungsgemäß können die einzelnen Ausführungsformen auch miteinander beliebig kombiniert werden.

Vorzugsweise Ausgestaltungen der Erfindung sind in den weiteren Unteransprüchen angegeben. Insbesondere ist es zweckmäßig, beide Montageplatten über ein Zwischenstück miteinander zu verbinden. Vorzugsweise sind beide Montageplatten aus einer einzigen abgewinkelten Grundplatte gebildet, um eine leichtere Handhabung zu ermöglichen. Zweckmäßig ist es, dass zwischen der die Lagerstation tragenden Montageplatte und einer Unterkante der Tür ein Abstand ausgebildet ist, der zum Durchgreifen einer Bedienperson geeignet ist. Dadurch besteht eine unmittelbare Zugänglichkeit zu einer in der Praxis häufig unterhalb der Objekt-Lagervorrichtung angeordneten Wasserwanne. Dadurch kann diese Wasserwanne ohne aufwendigen Ausbau leicht gereinigt werden. Insbesondere wenn ein solcher Höhenunterschied zwischen den beiden Montageplatten besteht, der mindestens so groß ist wie die Höhe der Objekt-Aufnahme, kann diese bis unterhalb der Objekt-Lagervorrichtung bewegt werden, so dass auch unmittelbar im unteren Bereich der Objekt-Lagervorrichtung Objekt-Lagerstellen vorgesehen sein können, wodurch zum einen die Zahl der möglichen Objekt-Lagerstellen und damit die Effizienz des Klimaschrankes erhöht wird und zum anderen ungenutzter Raum vermieden wird.

Ein besonders einfacher Aufbau der Transporteinrichtung wird dadurch erreicht, dass die Antriebe für die Objekt-Aufnahme an der Objekt-Aufnahme selbst angeordnet sind. Des weiteren ist es zweckmäßig, an der der Tür gegenüberliegenden Seite eine Bedienöffnung zum Durchgriff für mindestens einen Teil der Objekt-Aufnahme anzuordnen, damit die Objekte durch eine relativ klein ausbildbare Bedienöffnung in den Klimaschrank hinein oder aus diesem heraus transportiert werden können, ohne dass die in der Regel großflächige Tür, die häufig im wesentlichen der Montage und Wartung dient, geöffnet werden muss. Dabei muss die Bedienöffnung im wesentlichen lediglich so groß sein, dass eine Übergabe der Objekte von außen nach innen erfolgen kann, wobei es unerheblich ist, ob das Objekt von einer innerhalb des Klimaschrankes angeordneten Transporteinrichtung nach außen bzw. von außen nach innen transportiert wird oder dieser Transport von einer außerhalb des Klimaschrankes angeordneten Transporteinrichtung erfolgt. Aus Platzgründen wird die Transporteinrichtung des erfindungsgemäßen Klimaschrankes vorzugsweise in dem Klimaschrank selbst angeordnet sein. Dies führt auch zu einer besseren Funktionalität und zu einem einfacheren Aufbau.

Zweckmäßig ist es weiterhin, dass das bewegliche Verbindungselement, welches das Gegengewicht und die Objekt-Aufnahme verbindet, als Seil, Riemen oder als Kette ausgebildet ist. Das Verbindungselement kann in seiner Länge so bemessen werden, dass die Objekt-Aufnahme von dem Verbindungselement nicht über ihren höchsten Befestigungspunkt am Vertikalschlitten hinaus gezogen wird, wenn sich das Gegengewicht in seiner unteren Endstellung befindet. Dadurch wird die Sicherheit der senkrechten Bewegung der Objekt-Aufnahme erhöht. Die Objekt-Aufnahme kann dann auf einfache Weise manuell vom oberen Ende des Vertikalschlittens abgenommen werden. Vorzugsweise ist die Umlenkeinheit auf dem Vertikalschlitten oder in deren oberen Bereich angeordnet. Sie kann dann gleichzeitig als Sicherheitselement dienen, um ein unbeabsichtigtes Lösen der Objekt-Aufnahme von dem Vertikalschlitten zu verhindern. Vorzugsweise ist die Umlenkeinheit mit einem Schnellverschluss, beispielsweise einer einzigen Verschraubung fixiert. Die Umlenkeinheit kann an den Vertikalschlitten selbst oder an einem Gehäuseteil in der Nähe des Vertikalschlittens befestigt sein.

Nachfolgend wir ein Ausführungsbeispiel der Erfindung an Hand einer Zeichnung näher erläutert. In der Zeichnung zeigt:
- Fig. 1: die Rückansicht eines Klimaschrankes,
- Fig. 2: eine Transporteinrichtung zum Einbau in einen Klimaschrank,
- Fig. 3: eine zweite Ansicht der Transporteinrichtung,
- Fig. 4: die Objekt-Aufnahme der Transporteinrichtung,
- Fig. 5: die Vorderansicht des Klimaschrankes.

Der prinzipielle Aufbau von Klimaschränken ist allgemein bekannt. Insbesondere aus WO98/05753, auf deren Inhalt ausdrücklich Bezug genommen wird, ist der Aufbau von Klimaschränken mit einem Transportsystem und Objekt-Lagervorrichtungen bekannt.

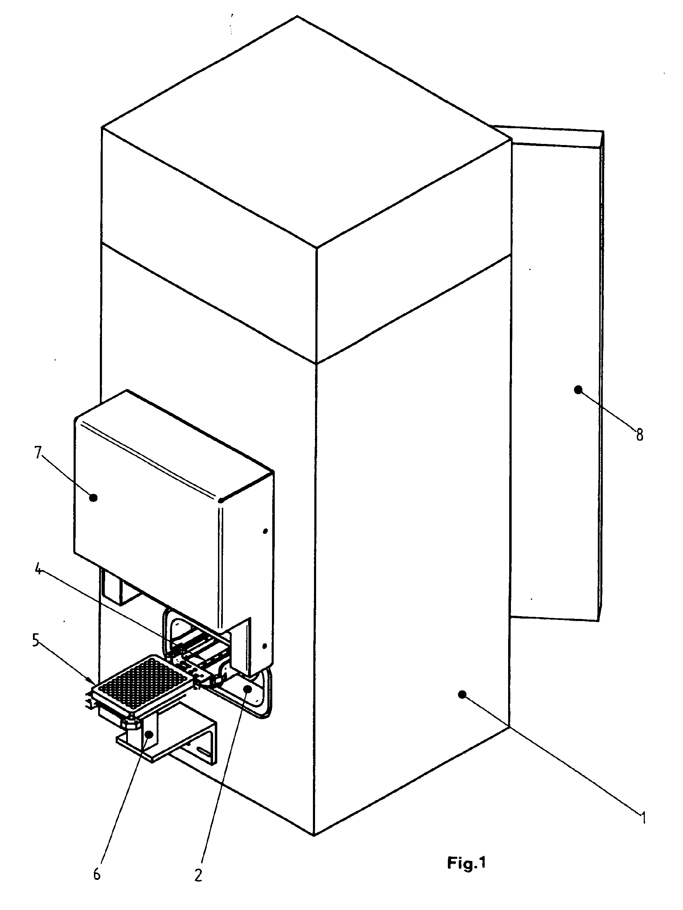

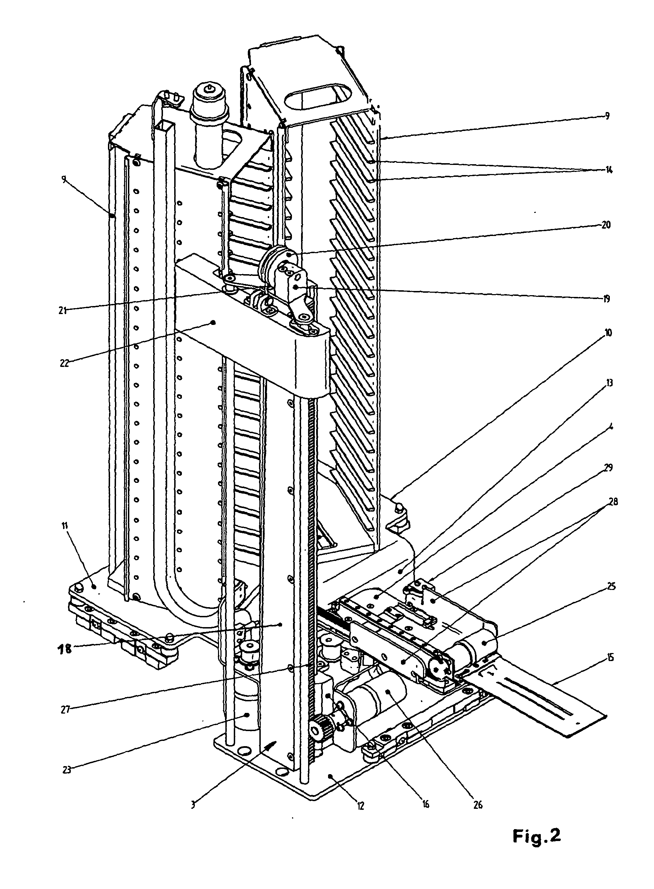

Fig. 1 zeigt einen Klimaschrank 1 mit einer Bedienöffnung 2, durch die hindurch eine im Inneren des Klimaschrankes angeordnete Transporteinrichtung 3 (vgl. Fig. 2) mittels ihrer Objekt-Aufnahme 4 ein Objekt 5 in den Klimaschrank hinein bzw. aus diesem heraus transportieren kann. Eine außerhalb des Klimaschrankes 1 vor der Bedienöffnung 2 angeordnete Übergabestation 6 ermöglicht die Übergabe des Objektes 5 an eine außerhalb angeordnete Handhabevorrichtung. Oberhalb der Bedienöffnung 2 ist ein Verschlussmechanismus 7 für die Bedienöffnung 2 angeordnet, der die Bedienöffnung 2 zum Zwecke des Hindurchtransports von Objekten 5 freigibt.

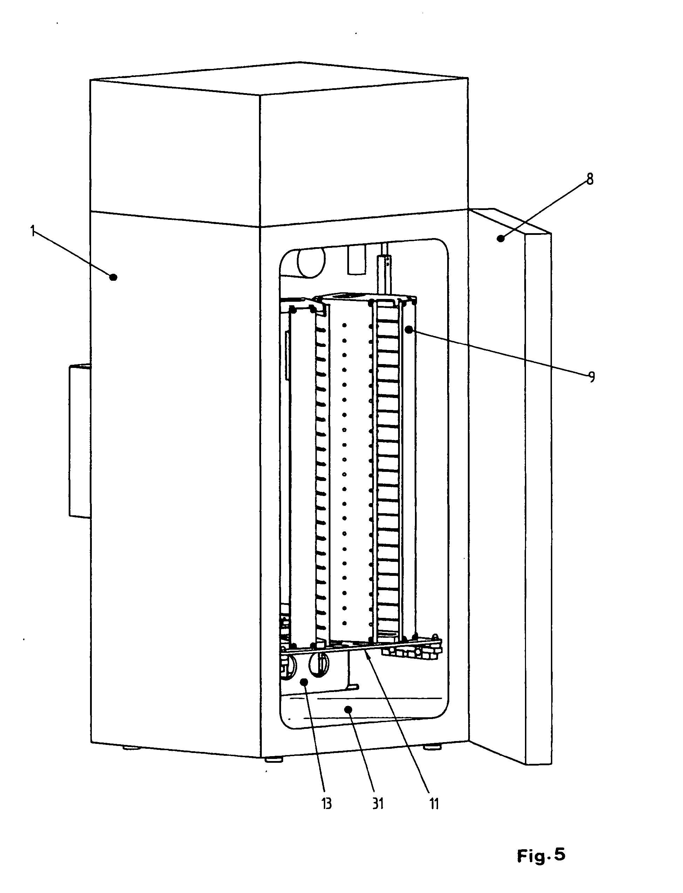

Der Klimaschrank 1 weist an seiner Vorderseite eine Tür 8 auf, die zum einen zur Montage bzw. Entnahme der Objekt-Lagervorrichtungen 9 (Fig. 2) dient und zum anderen der Reinigung oder Wartung des Klimaschrankes 1. Unterhalb der Lagerstation 10, die auf einem Montageblech 11 zwischen der Transporteinrichtung 3 und der Tür 8 angeordnet ist, ist eine Wasserwanne 31 im Klimaschrank 1 angeordnet zur Feuchtigkeitsregulierung. Die Montageplatte 11 weist einen ausreichenden Abstand zur Unterkante der Tür 8 auf, so dass eine Bedienperson problemlos in die Wasserwanne 31 hineingreifen kann, um diese zu säubern (Fig.5). Die Wasserwanne 31 kann separat ausgebildet sein oder als Bestandteil des Bodens der Innenwand der Klimaschrankes. Die Bodenfläche der Wasserwanne 31 kann ein leichtes Gefälle, vorzugsweise in Richtung der Rückseite aufweisen.

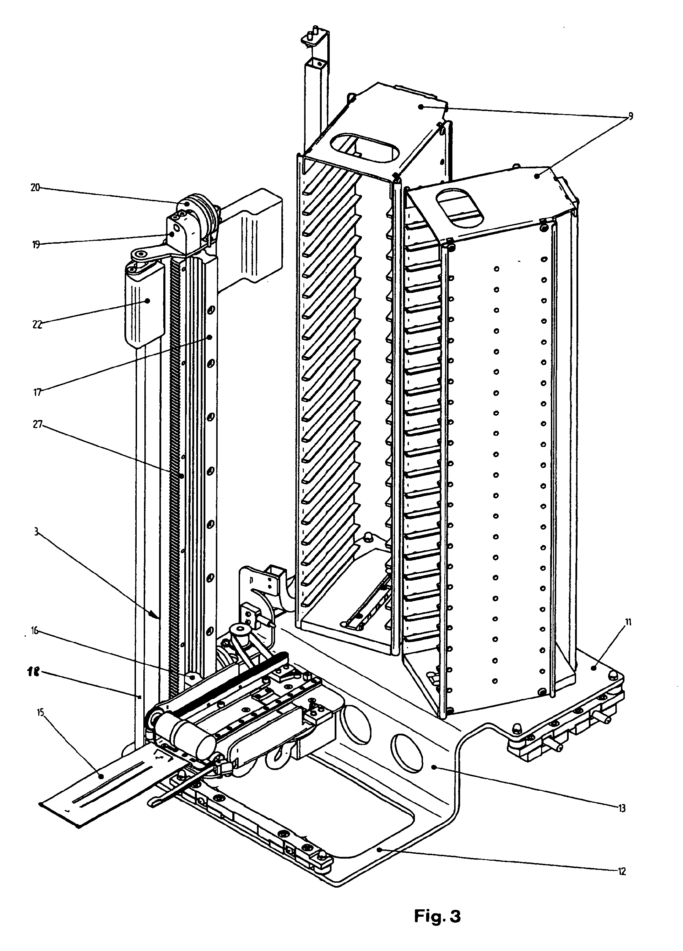

Die in den Fig. 2 und 3 dargestellte Transporteinrichtung 3 ist ebenfalls auf einer Montageplatte 12 aufgebaut. Die Montageplatte 12 ist mittels eines Zwischenstückes 13 mit der Montageplatte 11 verbunden, wobei die beiden Montageplatten 11;12 sowie das Zwischenstück 13 aus einem einheitlichen Materialstück, beispielsweise einem Blech, gefertigt sind. Die Montageplatte 12 ist in dem Klimaschrank 1 tiefer als die Montageplatte 11 eingebaut, so dass die komplette Objekt-Aufnahme 4 im wesentlichen unterhalb der Objekt-Lagervorrichtungen 9 angeordnet ist. Die Objekt-Lagervorrichtungen 9 weisen eine Vielzahl von durch Trägerschienen 14 gebildete Objekt-Lagerstellen für die Lagerung von Objekten 5 auf.

Die zu transportierenden Objekte 5 werden auf einem Schlitten 15 der Objekt-Aufnahme 4 aufgenommen und wieder abgegeben. Die Objekt-Aufnahme 4 der Transporteinrichtung 3 kann dazu horizontal und vertikal bewegt werden. Die horizontale Bewegung erfolgt als Dreh- oder Schwenkbewegung sowie als lineare Bewegung des Schlittens 15. Die vertikale Bewegung erfolgt an dem Vertikalschlitten 18, wobei ein Führungsprofil 17 des Vertikalschlittens 18 in ein Führungsprofil 16 der Objekt-Aufnahme 4 eingreift. Auf der Oberseite des Vertikalschlittens 18 ist eine Umlenkeinheit 19 mit einer Umlenkrolle 20 angeordnet. Über die Umlenkrolle 20 läuft ein Seil 21, an dem die Objekt-Aufnahme 4 einerseits und ein Gegengewicht 22 andererseits befestigt sind. Die Umlenkeinheit 19 ist so angeordnet, dass sie gleichzeitig einen Endanschlag für die Objekt-Aufnahme 4 und das Gegengewicht 22 bildet. Sie kann durch Lösen einer Schraube abgenommen werden, so dass die Objekt-Aufnahme 4 auf einfache Weise von dem Vertikalschlitten 18 getrennt werden kann. Das Seil 21 ist in seiner Länge so bemessen, dass die Objekt-Aufnahme 4 in ihrer oberen Stellung den Endanschlag nicht erreicht, wenn das Gegengewicht 22 sich in seiner unteren Position befindet. Dadurch ist eine Beschädigung der Einrichtung durch unbeabsichtigt zu weites Verfahren nicht möglich.

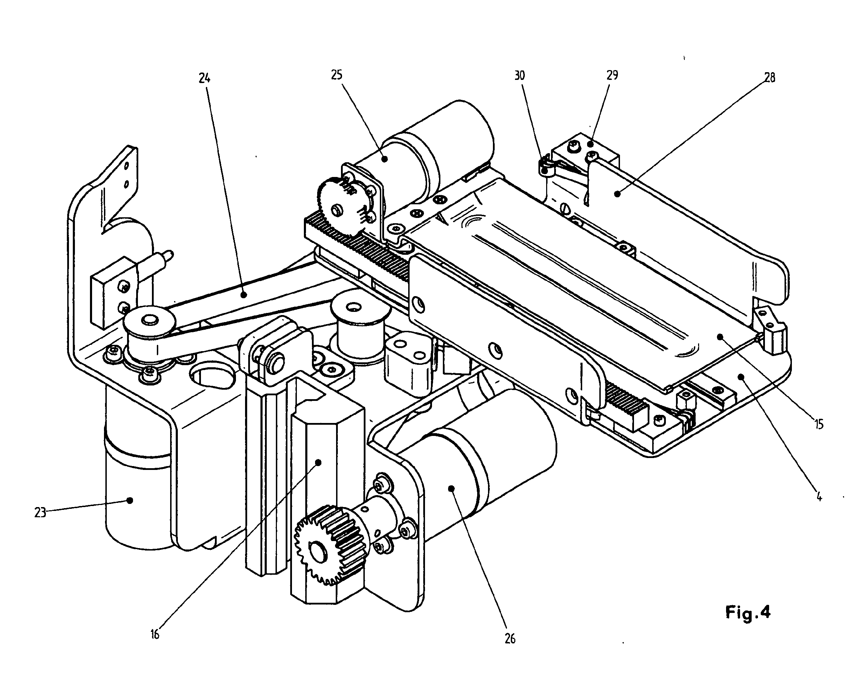

In Fig. 4 ist die Objekt-Aufnahme 4 im Detail dargestellt. Sämtliche für die Bewegung befindliche Antriebseinrichtungen sind an der Objekt-Aufnahme 4 angeordnet, wodurch eine einfachere Montage und Wartung möglich ist. Auch der konstruktive Aufwand verringert sich. Motor 23 bewirkt über einen Riemen 24 eine Drehbewegung des Schlittens 15. Die lineare Bewegung des Schlittens zur Aufnahme und Abgabe von Objekten 5, wobei der Schlitten 15 entweder durch die Bedienöffnung 2 hindurchfährt oder in die Objekt-Lagerstellen zwischen den Trägerschienen 14 hinein, wird durch einen direkt auf dem Schlitten 15 angeordneten Motor 25 realisiert. Ein weiterer Motor 26 ermöglicht über eine Zahnstange 27 die Vertikalbewegung längs des Vertikalschlittens 18.

Die Objekt-Aufnahme 4 weist Führungsschienen 28 zur seitlichen Führung des oder der Objekte 5 auf. Die Führungsschienen 28 garantieren eine exakte Aufnahme und Abgabe der Objekte sowie die stabile Lage auf der Objekt-Aufnahme 4 selbst. Seitlich des Schlittens 15 ist Tastschalter 29 angeordnet mit einem beweglichen Schaltelement 30. Das bewegliche Schaltelement 13 ragt in den durch die Führungsschienen 16 und den Schlitten 15 gebildeten Raum, der zur Aufnahme der Objekte 5 bestimmt ist, hinein. Er wird betätigt, sobald ein Objekt 5 auf dem Schlitten 15 abgelegt ist und sich der Schlitten 15 in seiner eingefahrenen, für die Drehbewegung bestimmten Position auf der Objekt-Aufnahme 4 befindet. Dadurch wird ein Signal ausgelöst, welches anzeigt, dass ein Objekt 5 auf der Objekt-Aufnahme 4 angeordnet ist. Das Signal kann innerhalb eines Steuerprogramms weiterverarbeitet werden, um den weiteren Transport an eine vorbestimmte Stelle innerhalb der Objekt-Lagerstellen 9 auszulösen.

Die in den Figuren dargestellten Objekt-Lagervorrichtungen 9 sind im wesentlichen ortsfest. Es ist jedoch auch möglich, die Objekt-Lagervorrichtungen 9 oder die Lagerstation 10 beweglich auszubilden, um beispielsweise eine bessere Anpassung an die Transporteinrichtung 3 zu ermöglichen oder um die Aufnahmekapazität der Lagerstation 10 zu erhöhen, dadurch, dass beispielsweise statt der in den Figuren dargestellten Objekt-Lagervorrichtungen 9 oder der Lagerstation 10 karrussellartige Lagervorrichtungen beziehungsweise Lagerstationen, wie sie beispielsweise aus WO98/05753 bekannt sind, verwendet werden.

## Patentansprüche

1. Klimaschrank mit mindestens einer Tür, mit einer Lagerstation mit mindestens einer Objekt-Lagervorrichtung, welche mehrere übereinander angeordnete Objekt-Lagerstellen aufweist, sowie mit einer Transporteinrichtung zum Zufahren von Objekten zu den Objekt-Lagerstellen, wobei die Transporteinrichtung eine Objekt-Aufnahme aufweist, wobei die Objekt-Aufnahme an einem Vertikalschlitten vertikal und horizontal verstellbar angeordnet ist und wobei Lagerstation und Transporteinrichtung auf Montageplatten angeordnet sind,
**dadurch gekennzeichnet,**
**dass** die Objekt-Aufnahme (4) durch ein bewegliches Verbindungselement (21), das über eine im oberen Bereich des Vertikalschlittens (18) angeordnete Umlenkeinheit (19) geführt ist, mit einem Gegengewicht (22) verbunden ist.

2. Klimaschrank nach dem vorhergehenden Anspruch,
**dadurch gekennzeichnet,**
**dass** die Lagerstation (10) zwischen der Tür (8) und der im Inneren des Klimaschranks (1) angeordneten Transporteinrichtung (3) angeordnet ist und dass die die Lagerstation (10) tragende Montageplatte (11) im Klimaschrank (1) höher angeordnet ist als die die Transporteinrichtung (3) tragende Montageplatte (12).

3. Klimaschrank nach einem der vorhergehenden Ansprüche,
**dadurch gekennzeichnet,**
**dass** die Objekt-Aufnahme (4) Führungsschienen (28) zur Führung des zu transportierenden Objekts (5) aufweist und mindestens einen Tastschalter (29) mit einem beweglichen Schaltelement (30), das in den Bereich des von der Objekt-Aufnahme (4) aufzunehmenden Objektes (5) hineinragt, wobei der Tastschalter (29) in einer Aufnahmestellung des Objekts (5) in der ObjektAufnahme (4) ein Signal auslöst.

4. Klimaschrank nach einem der vorhergehenden Ansprüche,
**dadurch gekennzeichnet,**
**dass** die Objekt-Aufnahme (4) eine horizontal bewegliche Schaufel (15) zur Aufnahme mindestens eines Objektes (5) aufweist, dass die Schaufel (15) von einem Motor (25) angetrieben wird und dass der Motor (25) an der Schaufel (15) angeordnet ist.

5. Klimaschrank nach einem der vorhergehenden Ansprüche,
**dadurch gekennzeichnet,**
**dass** beide Montageplatten (11;12) über ein Zwischenstück (13) miteinander verbunden sind.

6. Klimaschrank nach einem der vorhergehenden Ansprüche,
**dadurch gekennzeichnet,**
**dass** zwischen der die Lagerstation (10) tragenden Montageplatte (11) und einer Unterkante der Tür (8) ein Abstand ausgebildet ist, der zum Durchgreifen einer Bedienperson geeignet ist.

7. Klimaschrank nach einem der vorhergehenden Ansprüche,
**dadurch gekennzeichnet,**
**dass** zwischen den beiden Montageplatten (11;12) ein solcher Höhenunterschied besteht, der mindestens so groß ist wie die Höhe der Objekt-Aufnahme (4).

8. Klimaschrank nach einem der vorhergehenden Ansprüche,
**dadurch gekennzeichnet,**
**dass** die Antriebe für die Objekt-Aufnahme (4) an dieser angeordnet sind.

9. Klimaschrank nach einem der vorhergehenden Ansprüche,
**dadurch gekennzeichnet,**
**dass** an seiner der Tür (8) gegenüberliegenden Seite eine Bedienöffnung (2) zum Durchgriff für mindestens einen Teil der Objekt-Aufnahme (4) angeordnet ist.

10. Klimaschrank nach einem der vorhergehenden Ansprüche,
**dadurch gekennzeichnet,**
**dass** das bewegliche Verbindungselement (21) als Seil, Riemen oder Kette ausgebildet ist.

11. Klimaschrank nach einem der vorhergehenden Ansprüche,
**dadurch gekennzeichnet,**
**dass** die Umlenkeinheit (19) auf dem Vertikalschlitten (18) angeordnet und vorzugsweise mit einem Schnellverschluss arretiert ist.

12. Klimaschrank nach einem der vorhergehenden Ansprüche,
**dadurch gekennzeichnet,**
**dass** die Transporteinrichtung (3) im Inneren des Klimaschrankes (1) angeordnet ist.

## Claims

1. A climatic cabinet with at least one door, having a storage station with at least one object storage device, which exhibits several storage locations arranged one on top of the other, and having a transport device for feeding objects to the object storage locations, wherein the transport device has an object receiver, wherein the object receiver is secured to a vertical carriage in such a way that it can be moved vertically and horizontally, and wherein the storage station and transport device are arranged on mounting plates,
**characterized in that**
the object receiver (4) is linked with a counterweight (22) by a moveable connecting element (21) routed over a reversing unit (19) arranged in the upper area of the vertical carriage (18).

2. The climatic cabinet according to the preceding claim, **characterized in that** the storage station (10) is situated between the door (8) and the transport device (3) arranged inside the climatic cabinet (1), and that the mounting plate (11) that carries the storage station (10) is situated higher in the climatic cabinet than the mounting plate (12) that carries the transport device (3).

3. The climatic cabinet according to one of the preceding claims, **characterized in that** the object receiver (4) has guide rails (28) for guiding the object (5) to be transported, and has at least one microswitch (29) with a moveable switching element (30) that projects into the area of the object (5) to be received by the object receiver (4), wherein the microswitch (29) triggers a signal when the object (5) is in a receive position on the object receiver (4).

4. The climatic cabinet according to one of the preceding claims, **characterized in that** the object receiver (4) has a horizontally moveable blade (15) for receiving at least one object (5), that the blade (15) is driven by a motor (25), and that motor (25) is situated on the blade (15).

5. The climatic cabinet according to one of the preceding claims, **characterized in that** both mounting plates (11; 12) are connected with each other by an adapter (13).

6. The climatic cabinet according to one of the preceding claims, **characterized in that** a gap is formed between the mounting plate (11) that carries the storage station (10) and the lower edge of the door (8), the gap being suitable for service personnel to reach through.

7. The climatic cabinet according one of the preceding claims, **characterized in that** the difference in height between the two mounting plates (11; 12) is at least as great as the height of the object receiver (4).

8. The climatic cabinet according to one of the preceding claims, **characterized in that** the drives for the object receiver (4) are situated on the object receiver.

9. The climatic cabinet according to one of the preceding claims, **characterized in that** a service opening (2) is arranged on the side of the climatic cabinet opposite the door (8) as an access for at least part of the object receiver (4).

10. The climatic cabinet according to one of the preceding claims, **characterized in that** the moveable connecting element (21) is designed as a rope, belt or chain.

11. The climatic cabinet according to one of the preceding claims, **characterized in that** the reversing unit (19) is arranged on the vertical carriage (18) and is locked in place with a quick acting closure.

12. The climatic cabinet according to one of the preceding claims, **characterized in that** the transport device (3) is arranged inside the climatic cabinet (1).

## Revendications

1. Armoire climatique avec au moins une porte, avec un poste de stockage comprenant au moins un dispositif pour le stockage d'objets qui comporte plusieurs emplacements de stockage d'objets superposés, et avec un dispositif de transport pour amener des objets aux emplacements de stockage d'objets, dans lequel le dispositif de transport comprend un logement d'objet, lequel logement d'objet est disposé de manière mobile horizontalement et verticalement sur un chariot vertical, et dans lequel le poste de stockage et le dispositif de transport sont disposés sur des plaques de montage, **caractérisée en ce que** le logement d'objet (4) est relié à un contrepoids (22) par un élément de liaison mobile (21) guidé par une unité de renvoi (19) disposée dans la partie supérieure du chariot vertical (18).

2. Armoire climatique selon la revendication précédente, **caractérisée en ce que** le poste de stockage (10) est disposé entre la porte (8) et le dispositif de transport (3) disposé à l'intérieur de l'armoire climatique (1) et **en ce que** la plaque de montage (11) portant le poste de stockage (10) est disposée dans l'armoire climatique (1) plus haut que la plaque de montage (12) portant le dispositif de transport (3).

3. Armoire climatique selon l'une quelconque des revendications précédentes, **caractérisée en ce que** le logement d'objet (4) possède des rails de guidage (28) pour le guidage de l'objet à transporter (5) et au moins un contact à palpeur (29) avec un élément de commutation mobile (30), qui dépasse au niveau de l'objet (5) qui doit être reçu dans le logement d'objet (4), le contact à palpeur (29) déclenchant un signal dans une position de réception de l'objet (5) dans le logement d'objet (4).

4. Armoire climatique selon l'une quelconque des revendications précédentes, **caractérisée en ce que** le logement d'objet (4) possède un godet (15) mobile horizontalement pour recevoir au moins un objet (5), **en ce que** le godet (15) est entraîné par un moteur (25) et **en ce que** le moteur (25) est disposé sur le godet (15).

5. Armoire climatique selon l'une quelconque des revendications précédentes, **caractérisée en ce que** les deux plaques de montage (11 ; 12) sont reliées entre elles par une pièce intercalaire (13).

6. Armoire climatique selon l'une quelconque des revendications précédentes, **caractérisée en ce qu'**il est prévu entre la plaque de montage (11) portant le poste de stockage (10) et le bord inférieur de la porte (8) un espace destinée au passage des mains d'un opérateur.

7. Armoire climatique selon l'une quelconque des revendications précédentes, **caractérisée en ce qu'**il est prévu entre les deux plaques de montage (11 ; 12) une différence de hauteur égale au moins à la hauteur du logement d'objet (4).

8. Armoire climatique selon l'une quelconque des revendications précédentes, **caractérisée en ce que** les entraînements du logement d'objet (4) sont disposés sur celui-ci.

9. Armoire climatique selon l'une quelconque des revendications principales, **caractérisée en ce qu'**elle comporte sur son côté faisant face à la porte (8) une ouverture de service (2) pour le passage d'au moins une partie du logement d'objet (4).

10. Armoire climatique selon l'une quelconque des revendications précédentes, **caractérisée en ce que** l'élément de liaison mobile (21) est conformé comme un câble, une courroie ou une chaîne.

11. Armoire climatique selon l'une quelconque des revendications précédentes, **caractérisée en ce que** l'unité de renvoi (19) est disposée sur le chariot vertical (18) et est bloquée de préférence par un verrou rapide.

12. Armoire climatique selon l'une quelconque des revendications précédentes, **caractérisée en ce que** le dispositif de transport (3) est disposé à l'intérieur de l'armoire climatique (1).
